Europäisches Patentamt

**European Patent Office**

Office européen des brevets

(11) Numéro de publication: **0 178 999**
**A1**

(12) # DEMANDE DE BREVET EUROPEEN

(21) Numéro de dépôt: 85402010.4

(22) Date de dépôt: 16.10.85

(51) Int. Cl.⁴: **A 01 B 23/02**
**A 01 B 33/14**

(30) Priorité: 17.10.84 FR 8415891

(43) Date de publication de la demande:
23.04.86 Bulletin 86/17

(84) Etats contractants désignés:
DE GB IT

(71) Demandeur: KONGSKILDE FRANCE
Avenue Ampère Zone Industrielle
F-45802 Saint-Jean-de-Braye(FR)

(72) Inventeur: Boudin, Jean-Pierre
584 rue de Bransles
F-45560 Saint Denis en Val(FR)

(74) Mandataire: Lepeudry-Gautherat, Thérèse et al,
ARMENGAUD JEUNE CABINET LEPEUDRY 23 boulevard
de Strasbourg
F-75010 Paris(FR)

(54) Système pour fixer un élément de travail du sol tel qu'une dent sur un outil agricole rotatif comportant au moins un flasque.

(57) L'élément (1) comprend une embase (2) dont la section transversale est sensiblement rectangulaire et la section longitudinale sensiblement trapézoïdale et qui comporte à sa partie inférieure (5) une cavité (6). Le flasque (8) comprend autant d'évidements (9) qu'il doit comporter d'éléments (1), chaque évidement (9) présentant en coupe longitudinale la forme générale d'un U et une section tranversale sensiblement rectangulaire, et comportant dans son fond un creux (10) correspondent à la cavité (6). Ce système comprend un ressort (7) disposé dans la cavité (6) et le creux (10), ainsi que des coins (11) qui sont disposés entre l'embase (2) et les parois de l'évidement et qui coopèrent avec elles pour coincer cet élément (1) dans cet évidement (9).

Fig. 1

EP 0 178 999 A1

La présente invention est relative à un système pour fixer un élément de travail du sol tel qu'une dent sur un outil agricole rotatif comportant au moins un flasque.

Actuellement ces éléments sont fixés soit directement sur l'axe de rotation de l'outil agricole, soit sur une pièce solidaire de cet axe, au moyen de vis, boulons ou goupilles le plus généralement. Si le montage de ces éléments ne pose pas de problème, par contre il n'en est pas de même lors du démontage : celui-ci est provoqué soit par l'obligation de remplacer l'élément consécutivement à son usure ou à sa détériotation, soit par la nécessité de changer les éléments compte tenu du travail à effectuer. Du fait des conditions dans lesquelles travaillent ces outils agricoles, il est, en effet, nécessaire d'avoir recours à des instruments très divers pour démonter ces éléments et parfois même inattendus : burins, dégrippants et même chalumeau. De plus les moyens de fixation sont abîmés lors du démontage pour ne pas dire détériorés, interdisant de ce fait leur réemploi pour fixer un nouvel élément.

Aussi un des buts de la présente invention est-il de fournir un système pour fixer un élément de travail du sol tel qu'une dent sur un outil agricole rotatif, qui permet de monter et de démonter rapidement et aisément cet élément sur cet outil.

Un autre but de l'invention est de fournir un système de ce type qui peut être réutilisé après chaque changement d'élément.

Ces buts ainsi que d'autres qui apparaîtront par la suite, sont atteints par un système pour fixer un élément de travail du sol tel qu'une dent, sur un outil agricole rotatif comportant au moins un flasque, caractérisé selon la présente invention, par le fait que cet élément comprend une embase dont la section transversale est sensiblement rectangulaire et la section longitudinale sensiblement trapézoïdale et qui comporte à sa partie inférieure une cavité, que ce flasque comprend autant d'évidements qu'il doit comporter d'éléments, chaque évidement présentant en coupe longitudinale la forme générale d'un U et une section transversale sensiblement rectangulaire, et comportant dans son fond un creux correspondant à la cavité, et que ce système comprend un ressort disposé dans la cavité et le creux, ainsi que des coins qui sont disposés entre l'embase et les parois de l'évidement et qui coopèrent avec elles pour coincer l'élément dans cet évidement.

Avantageusement les petits côtés de l'embase comportent chacun deux facettes formant un dièdre relativement ouvert et dont l'arête est parallèle aux grands côtés de cette embase.

De préférence cette arête est inclinée par rapport à la verticale à partir de la partie inférieure de l'embase selon un angle de l'ordre de 5°.

Avantageusement ce dièdre est ouvert d'un angle inférieur à 160° et préférentiellement d'un angle de l'ordre de 150°.

De préférence, chaque coin est constitué de deux demi-coins comportant une face inclinée coopérant avec la facette correspondante de l'embase.

Avantageusement le ressort est un ressort hélicoïdal.

De préférence les parois de l'évidement comportent un décrochement sur lequel prennent appui les coins lors de leur mise en place.

Selon un mode de réalisation de l'invention, ce système comprend en outre un moyen de sécurité pour prévenir toute libération accidentelle des coins.

Avantageusement ce moyen de sécurité est constitué par un clip qui est disposé sensiblement au-dessus des coins, qui comprend deux bras recourbés chacun sur lui-même, coopérant avec des encoches horizontales ménagées dans les parois de l'évidement, comportant déjà les décrochements, et qui prend appui sur la partie sensiblement médiane du grand côté de l'embase et contre les autres parois
de l'évidement.

La description qui va suivre et qui ne présente
aucun caractère limitatif, permettra à l'homme du métier
de mieux comprendre la réalisation et les avantages de la
présente invention. Elle doit être lue en regard des
figures annexées, parmi lesquelles :

- la figure 1 représente en coupe longitudinale
une dent fixée dans un flasque selon le système de l'invention ;

- la figure 2 est une coupe transversale selon la
ligne II-II de la figure 1 ; et

- la figure 3 est une coupe transversale selon la
ligne III-III de la figure 1.

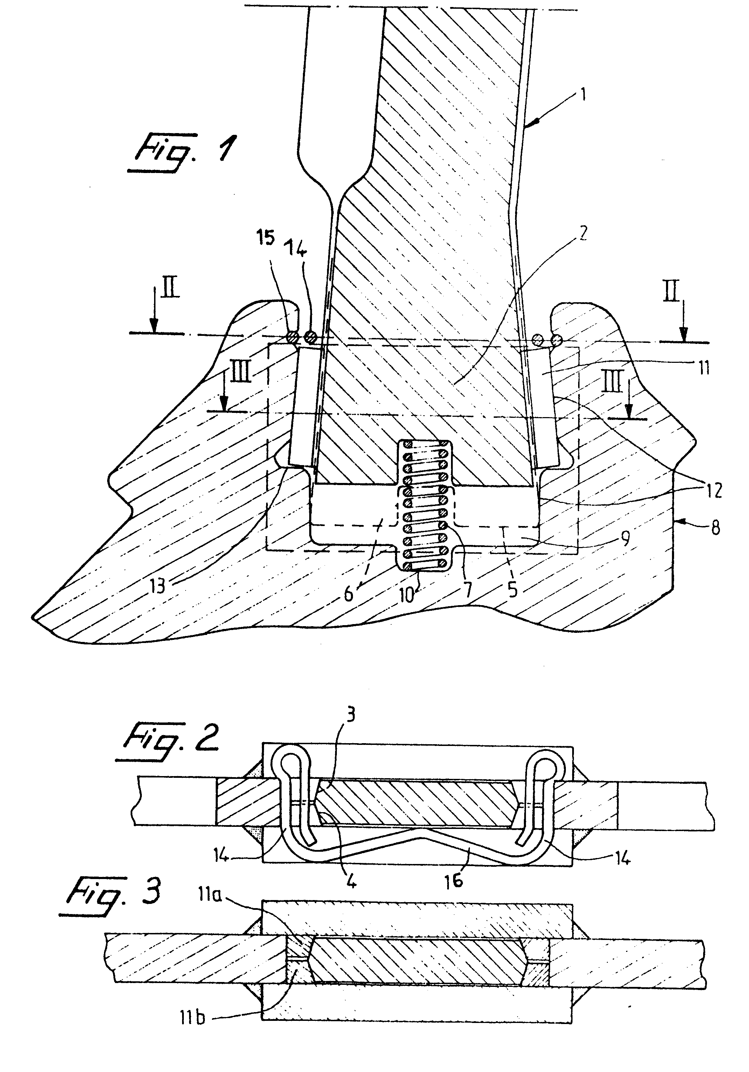

Sur la figure 1, a été représentée en traits pleins
une dent montée dans un flasque d'un outil agricole
selon le système de l'invention.

Cette dent qui est un élément pour travailler
le sol, est désignée dans son ensemble par la référence 1.
Elle comporte une embase 2 dont la section est approximativement rectangulaire : en fait les petits côtés comportent
chacun deux facettes 3 et 4 formant un dièdre relativement
ouvert dont l'arête est parallèle aux grands côtés de cette
embase 2. Cette arête est légèrement inclinée par rapport
à la verticale à partir de la partie inférieure de l'embase 2 : l'angle d'inclinaison est de l'ordre de 5° selon
cet exemple de réalisation. De ce fait la section longitudinale de cette dent est sensiblement trapézoïdale.

Afin de donner un sens aux termes tels qu'inférieur, haut, bas etc..., on supposera que la dent est
en position verticale : son embase étant en bas et sa
partie travaillante en haut ; comme cela est d'ailleurs
représenté sur les figures. Ceci oriente de même la partie
du flasque sur laquelle est montée cette dent.

L'angle de chaque dièdre formé par les deux facettes 3 et 4 est généralement inférieur à 160° et préférentiellement de l'ordre de 150°.

La face inférieure 5 de l'embase 2 comporte, sensiblement en son centre, une cavité 6 d'axe vertical sur le fond de laquelle prend appui un ressort 7 comme décrit ci-dessous.

Le flasque, désigné dans son ensemble par la référence 8, qui peut être de toute forme, est monté sur un axe (non représenté) d'un outil agricole rotatif. Il présente autant d'évidements 9 qu'il doit comporter de dents 1.

Cet évidement 9 présente en coupe longitudinale la forme générale d'un U et une section transversale sensiblement rectangulaire permettant un enfoncement de la dent 1 de la hauteur de cet évidement.

Le fond de cet évidement 9 comporte un creux 10 qui correspond à la cavité 6 de la dent 1, permettant de recevoir l'autre extrémité du ressort 7.

Le système selon la présente invention comporte également des coins 11 qui sont disposés entre les facettes 3 et 4 de l'embase 2, avec lesquelles ils coopèrent, et la paroi 12 correspondante de l'évidement 9. Selon un mode de réalisation préféré de l'invention, chaque coin 11 est constitué de deux demi-coins 11a et 11b qui comporte chacun une face inclinée qui coopère avec la facette correspondante de l'embase 2 ; les faces des deux demi-coins 11a et 11b d'un même coin 11 forment donc un dièdre identique à celui formé par les facettes 3 et 4 de l'embase 2.

Ce système comporte également un ressort 7, déjà mentionné, de préférence hélicoïdal qui est disposé entre les fonds de la cavité 6 et du creux 10. Ce ressort pourrait être à lames.

Le montage d'une telle dent 1 sur un tel flasque d'un outil agricole rotatif est réalisé de la manière suivante.

On enfonce dans un évidement 9 disposé comme représenté sur la figure 1 - c'est-à-dire l'ouverture du U vers le haut - afin de faciliter au maximum les opérations de montage, une dent 1 après avoir disposé le ressort hélicoïdal 7 dans le creux 10 . Lorsque l'extrémité de ce ressort vient au contact du fond de la cavité 6, on
continue à enfoncer la dent 1 jusqu'à ce qu'elle vienne
en butée contre les parois 12 de l'évidement 9: cette
position extrême est représentée en pointillés sur la figure 1. Le ressort hélicoïdal 7 est donc comprimé.

Puis on introduit les demi-coins 11a et 11b de
chaque coin 11 le long des petits côtés de l'embase 2 :
ceux-ci glissent le long de facettes 3 et 4 formant rampes
du fait de leur inclinaison, et viennent en butée sur
des décrochements 13 ménagés dans les parois 12 de l'évidement 9.

En relâchant la pression exercée sur la dent 1,
celle-ci remonte sous l'action du ressort hélicoïdal 7,
mais est stoppée dans ce mouvement par le coincement réalisé
par les coins 11 en combinaison avec les facettes 3 et 4 de
l'embase 2 et les parois correspondantes de l'évidement.

Il peut s'avérer nécessaire pour certains
outils agricoles rotatifs de prévoir un moyen de sécurité
afin qu'une pression exercée accidentellement sur la
dent 1 en direction de l'évidement n'entraîne la chute
des coins 11 et par là-même celle de la dent 1.

Ce moyen de sécurité peut, par exemple, être
constitué par un clip 16 qui prend appui sur une partie
sensiblement médiane d'un grand côté de l'embase 2 et qui
comprend deux bras 14, chacun étant recourbé sur lui-même,
coopérant avec des encoches horizontales 15 ménagées dans
les parois 12 de l'évidement 9. Les bras 14 de ce clip 16
sont glissés dans ces encoches jusqu'à ce que celui-ci
vienne au contact du grand côté de l'embase 2. Ce clip 16 est
disposé sensiblement au-dessus des coins 11 et prend également appui contre les autres parois de l'évidement 9.

Pour démonter une dent 1 fixée sur un flasque 8
par le système selon la présente invention, il suffit de
retirer le clip 16 éventuel ; puis de mettre la dent 1 en
position verticale mais sa partie travaillante orientée
vers le bas et d'appuyer sur elle de façon à comprimer le
ressort 7 ce qui libère les coins 11 et par là-même la
dent 1.

REVENDICATIONS

1.- Système pour fixer un élément de travail du sol tel qu'une dent sur un outil agricole rotatif comportant au moins un flasque caractérisé en ce que ledit élément (1) comprend une embase (2) dont la section transversale est sensiblement rectangulaire et la section longitudinale sensiblement trapézoïdale et qui comporte à sa partie inférieure (5) une cavité (6), que ledit flasque (8) comprend autant d'évidements (9) qu'il doit comporter d'éléments (1), chaque évidement (9) présentant en coupe longitudinale la forme générale d'un U et une section transversale sensiblement rectangulaire, et comportant dans son fond un creux (10) correspondant à ladite cavité (6), et que ledit système comprend un ressort (7) disposé dans la cavité (6) et le creux (10), ainsi que des coins (11) qui sont disposés entre l'embase (2) et les parois dudit évidement et qui coopèrent avec elles pour coincer ledit élément (1) dans ledit évidement (9).

2.- Système selon la revendication 1, caractérisé en ce que les petits côtés de l'embase (2) comportent chacun deux facettes (3, 4) formant un dièdre relativement ouvert et dont l'arête est parallèle aux grands côtés de ladite embase (2).

3.- Système selon la revendication 2, caractérisé en ce que ladite arête est inclinée par rapport à la verticale à partir de la partie inférieure (5) dudit élément (1) selon un angle de l'ordre de 5º.

4.- Système selon la revendication 2, caractérisé en ce que ledit dièdre est ouvert d'un angle inférieur à 160º.

5.- Système selon la revendication 4, caractérisé en ce que ledit dièdre est ouvert d'un angle de l'ordre de 150º.

6.- Système selon l'une quelconque des revendications 1 à 5, caractérisé en ce que chaque coin (11) est constitué de deux demi-coins (11a, 11b) comportant une face inclinée coopérant avec la facette correspondante de ladite embase (2).

7.-Système selon l'une quelconque des revendications 1 à 6, caractérisé en ce que ledit ressort (7) est un ressort hélicoïdal.

8.- Système selon l'une quelconque des revendications 1 à 7, caractérisé en ce que les parois (12) dudit évidement (9) comportant un décrochement (13) sur lequel prennent appui les coins (11) lors de leur mise en place.

9.- Système selon l'une quelconque des revendications 1 à 8, caractérisé en ce qu'il comprend en outre un moyen de sécurité pour prévenir toute libération accidentelle desdits coins (11).

10.- Système selon la revendication 9, caractérisé en ce que ledit moyen de sécurité est constitué par un clip (16) est disposé sensiblement au-dessus desdits coins (11), qui comprend deux bras (14) recourbés chacun sur lui-même, coopérant avec des encoches horizontales (15) ménagées dans les parois (12) dudit évidement (9) et qui prend appui sur la partie sensiblement médiane du grand côté de ladite embase (2) et contre les autres parois dudit évidement (9).

1/1                    0178999

*Fig. 1*

*Fig. 2*

*Fig. 3*

# RAPPORT DE RECHERCHE EUROPEENNE

**Office européen des brevets**

0178999

EP 85 40 2010

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| A | US-A-2 593 065 (SIMON) | | A 01 B 23/02 <br> A 01 B 33/14 |
| A | FR-A-2 487 157 (R. McKAY LTD.) | | |
| A | FR-A-2 501 457 (RICHARD) | | |

**DOMAINES TECHNIQUES RECHERCHES (Int. Cl. 4)**

A 01 B

Le présent rapport de recherche a été établi pour toutes les revendications

| Lieu de la recherche | Date d'achèvement de la recherche | Examinateur |
|---|---|---|
| LA HAYE | 10-12-1985 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82